# EUROPEAN PATENT SPECIFICATION

(11) **EP 4 064 486 B1**
(45) Date of publication and mention of the grant of the patent: **01.07.2026**
(21) Application number: 22460012.2
(22) Date of filing: 25.02.2022
(51) Int. Cl.: H02G 13/00

(54) **LIGHTNING ROD WITH A LIGHTNING PROTECTION SYSTEM ISOLATED FROM THE PROTECTED FACILITY, WITH A POWER SUPPLY CONTROL UNIT THAT MONITORS THE TECHNICAL CONDITION OF ITS HEAD**
BLITZABLEITER MIT EINER VON DER GESCHÜTZTEN ANLAGE ISOLIERTEN BLITZSCHUTZANLAGE MIT EINER STROMVERSORGUNGSSTEUEREINHEIT, DIE DEN TECHNISCHEN ZUSTAND SEINES KOPFES ÜBERWACHT
TIGE DE PARATONNERRE DOTÉE D'UN SYSTÈME DE PROTECTION CONTRE LA FOUDRE ISOLÉE À PARTIR DE L'INSTALLATION PROTÉGÉE, AVEC UNE UNITÉ DE COMMANDE D'ALIMENTATION ÉLECTRIQUE SURVEILLANT L'ÉTAT TECHNIQUE DE SA TÊTE

(30) Priority: 26.03.2021 PL 43741821
(43) Date of publication of application: 28.09.2022
(73) Proprietor: Smycz, Eugeniusz, 75018 Paris (FR)
(72) Inventor: Smycz, Eugeniusz, 75018 Paris (FR)
(74) Representative: Warzybok, Tadeusz

(56) References cited:
- EP-A1- 0 402 552
- EP-A2- 1 944 627
- EP-A2- 2 472 688
- WO-A1-02/43216
- PL-A1- 429 218
- ROSOLEM JOAO B ET AL: "A fiber optic powered sensor designed for partial discharges monitoring on high voltage bushings", 2015 SBMO/IEEE MTT-S INTERNATIONAL MICROWAVE AND OPTOELECTRONICS CONFERENCE (IMOC), IEEE, 3 November 2015 (2015-11-03), pages 1 - 5, XP032840269, DOI: 10.1109/IMOC.2015.7369072
- BOHNERT K ET AL: "FIBER-OPTIC VOLTAGE SENSOR FOR SF6 GAS-INSULATED HIGH-VOLTAGE SWITCHGEAR", APPLIED OPTICS, OPTICAL SOCIETY OF AMERICA, WASHINGTON, DC, US, vol. 38, no. 10, 1 April 1999 (1999-04-01), pages 1926 - 1933, XP000828508, ISSN: 0003-6935, DOI: 10.1364/AO.38.001926

## Description

The subject of the invention is a lightning rod with a lightning protection system isolated from the protected facility, equipped with a power supply control unit that monitors the technical condition of its head and causes that the lightning current taken over by the head mounted on the mast is discharged to ground, without the possibility of penetrating the facility.

Intensive storms are often accompanied by electrostatic discharges in the atmosphere, which are also dangerous for buildings, as a lightning strike can start a fire or damage electrical installations and devices connected to the electricity network. It is commonly accepted that lightning is a powerful electric discharge with a current intensity of up to 200,000 A and an air temperature of up to 30,000°C. Therefore, the basic task of the lightning rod - lightning protection system is to receive a lightning strike and to safely discharge the lightning current to the ground by the shortest possible route. A typical lightning protection system, in accordance with the harmonized standard PN-EN 62305-1: 2011 (as amended), consists of vertical and horizontal air terminals and discharge wires connecting these lightning rods with the earth electrodes that discharge the electric charge to metal elements located in the ground. On the other hand, from publications on the website, there are known active lightning rods of the "Gromostar" type which protect the facility from the effects of a direct lightning strike, equipped with a lightning mast with a head with a blade and an ionizing device (system) and a discharge wire connecting the air terminal with the earth electrode, whereby the initiating system has a spark gap connected to the head and to the mast.

The commonly known, simplest design of Franklin's lightning rod is a metal rod sharpened at one end and connected to the ground. The blade of this rod placed in a strong electric field causes ionization of the air in the space surrounding the blade. Its principle of operation is based on the fact that there are formed two channels to conduct the resulting ions - the first negative from the cloud towards the ground and the second positive with a certain delay from the lightning rod blade towards the cloud, and the higher they meet, the greater the effectiveness of this lightning rod is. At the same time, it has been found that the effectiveness of the lightning rod is the greater the faster the ionization around its blade takes place, giving rise to the formation of a second conducting channel towards the cloud, and there are various known methods of increasing this efficiency. One of these methods involves ionizing the air with a radioactive source to create free electric charges around the lightning rod blade. The disadvantage of this solution is that at the moment of a lightning strike, the radioactive element ruptures, causing radioactive contamination of the atmosphere, therefore the use of such lightning conductors has been prohibited (PN-EN 62305-1: 2011 (as amended).

The lightning rod with accelerated air ionization, known from the Polish patent description No. PL192704B1, is equipped around its blade with a Franklin electrode connected to the ground and the electrical system consists of a main ionization electrode equipped with a jump electrode, connected in series through a coil and a spark plug with the ground and at least one collecting electrode connected directly to the earth, the collecting electrode positioned opposite and in the vicinity of the jump electrode, the spark gap consisting of a blade and a flat electrode opposite it. On the other hand, a variant of the design of this lightning rod is that it consists of the main ionization electrode equipped with a jump electrode, connected in series with the ground through a coil and a spark gap, a collecting electrode connected directly to the ground located opposite and near the jump electrode, and an electronic system consisting of an optical element, connected to the base of the transistor, the collector of which is connected to one end of the coil winding forming a transformer with the coil, and the other end of the coil winding is connected in series through a resistor and a power source to the optical element, with the electric circuit of this system between the other end of the coil and a resistor, and between the optical element and the power source there are capacitors connected in series to the ground of the electronic circuit. It is advantageous when the optical element of the lightning rod is located near and opposite the magneto, and the main ionization electrode is connected to the ground only through the coil which together with the coil of the electronic system is a transformer, and moreover, the lightning rod has an additional ionization electrode connected to the ground through the coil and the magneto, and has more than one collecting electrode, the magneto being composed of a blade and a flat electrode opposite it. The advantage of this solution is that at the moment of lightning descent, the current flowing in the coil of the ionization electrode increases rapidly, therefore this coil blocks its flow through the magneto, protecting its blade against damage, while the current flow takes place between the jump electrode and the collecting electrode, which also provides protection against damage to the blade of the main ionization electrode.

A lightning rod with accelerated air ionization is known from the Polish patent description of the invention No. PL204398B1, protecting construction objects against lightning, with increased effectiveness of its operation, consisting of a main ionization electrode connected in series through a high-voltage coil and a magneto with a earthing electrode, with the coil placed in a metal reinforcing electrode with its upper face closed and connected to the tip of the main ionization electrode, and the space between this coil and the reinforcing electrode is filled with a solid dielectric, preferably polyurethane resin. A further lightning rod with accelerated air ionisation is known from the Polish patent application No. PL429218A1, protecting construction objects against lightning. In this document an electric discharge lightning meter is installed for monitoring the lightning rod.

The patents DE10228665B4 and DE10233528B4 disclose lightning protection devices designed to discharge lightning current, built on the basis of insulated current carrying conductors, which use an electric conductor embedded in an insulating sheath having a conductive jacket, while in the connection section of the electric conductor with an air terminal unit, a system for field control to prevent sliding discharges and increase resistance to impulse voltages, and furthermore, the lightning current discharge device is connected to a lightning current free equipotential bonding element.

Also the German patent specification DE102005041167A1 discloses a lightning current discharge device, consisting of an air terminal connected by an electric wire to the earthing installation, the wire being surrounded by an insulation having a layer of material having a non-linear electric characteristic. It has turned out, however, that the high impulse voltages that occur when a lightning strikes the lightning protection device, especially in case of a wet and dirty surface of the support pipe, lead to sliding discharges along the surface of this pipe, as a result of which the entire lightning protection system fails.

Also the European patent specification EP2912738 discloses a lightning protection device with an insulated discharge wire, which runs at least in sections inside the supporting pipe, and with a mounting for an air terminal, which is put on the supporting tube and connected to it, the mounting of the air terminal comprises a head part, which on one of the on the sides it houses the conductor of the insulated discharge wire, and the air terminal on the other side, moreover, the supporting pipe at its end opposite to the head part of the mounting of the air terminal is connected by a sleeve arrangement to the lower foot of the discharge pipe or supporting pipe with earthing potential.

In this solution, both support pipes have electrically weakly conductive or semi-conductive properties that control the field, with a weakly electrically conductive or semi-conductive coating applied to the outer and/or inner surface of the support pipe, which is in electrical contact with the head part of the air terminal and the conductive sleeve system, and inside the sleeve arrangement there is provided a connecting means for electrically connecting the outer jacket of the discharge wire for equipotential bonding, this jacket being surrounded by a protective layer.

In turn, in the electronic system known from the Japanese patent description No. JP4148879 for testing the parameters of lightning protection installations, the voltage proportional to the leakage current of the surge arrester is charged to the capacitor of the charging circuit part, and the thyristor of the switching circuit part is turned off when this voltage reaches the value set by the Zener diode and through the two resistors the electric charge of the capacitor is discharged and the light-emitting LED is on. Conversely, when the leakage current of this lightning arrester reaches a certain level before deterioration, the light-emitting LED is illuminated once, causing the thyristor to switch on due to the voltage drop caused by the discharge of the capacitor, which is discharged again due to the leakage current, while the charging and discharging is repeated. The emission frequency of said light-emitting LED allows to know the magnitude of the leakage current of the lightning rod and the degree of deterioration of the surge arrester, thus achieving the preventive integrity of this lightning arrester.

In addition, the Polish patent specification No. PL201126 describes a method for assessing the electrical parameters of lightning protection systems, especially its head using electricity in conductors and a earthing control wire, which consists that at least one control wire electrically coupled with the test device is additionally installed to the lightning rod head equipped with a earthing wire, and then the test system of this device is activated by applying low voltage between the earthing and control cables or only between control cables that controls the electricity stored in the capacitor bank, supplied to the hisses of these cables, also connected with the tested elements of the lightning rod head, after which the obtained information about the electrical parameters is transmitted through these wires to the testing device mounted directly to the lightning rod head or located further from this head and electrically coupled to its earthing wire and to the control wire. The measurement of technical and operational parameters of the lightning rod head is performed only when the testing device is electrically conductive. Measurement of technical and operational parameters of the lightning rod head is also performed after coupling the testing device with the element measuring the current in the earthing wire, and based on this information, these parameters are automatically assessed. On the other hand, the set of testing devices for the application of the above-described method consists of a test device having a set of electric energy storage capacitors electrically connected with a control lead and an electromechanical system, provided with a movable element with measuring contacts located opposite the fixed contacts of these leads electrically connected with the tested head's elements of the lightning rod. It is also preferred that the connector socket is mounted on or in the mast of the lightning rod head and two or more control wires are connected to the capacitor bank. When testing the elements of the lightning rod head, the probe of the testing device is placed in the socket of the earthing and control conductor and the measuring contacts of this device are fixed in its fixed contacts. This solution is effective and reliable in the so-called electrically not separated (not insulated) lightning protection systems, in which lightning current flows through the conductive elements of the protected facility. However, it turned out that the application of the above-described technical solution in the so-called lightning protection systems (separated) from the protected facility is difficult, because the lightning current assumed by the heads should be discharged to the earthing without the possibility of getting to the protected facility. During lightning discharge, the electric potential of the head in relation to the earthing (structural elements of the facility) can reach values ranging from 50 kV to 100 kV. Then the wire connecting the test device located in the head with the monitoring device will have the head potential, which means that the potential difference between this conductor and the potential of the earthed structural conductive elements will be 50 kV, and with such a potential difference, electric breakdown of the test wire insulation and the flow current to the conductive elements of the protecting facility, which is unacceptable for the insulated lightning protection.

The disadvantage of the known and commonly used lightning rods is, among others, that when the transmitting system is coupled with the management system of a second facility, there is a possibility of electrocuting of people or damaging electrical devices, which requires the use of appropriate safety measures, for example transformers with high dielectric strength. In turn, the use of a test system with transmission requires the installation of photovoltaic panels next to the lightning rod head, which in these solutions are frequently damaged, which requires dismantling of the mast and is a technical problem and involves high costs. In addition, the use of a solution with a leadout wire for power supply and data transmission during operation carries the risk that the test wire, which is galvanically connected to the head, during lightning discharge into the head, causes that the potential of this head against the earthing potential may reach a value of several dozen kV. Particular difficulties are encountered in the lightning protection isolated from the protected facility, consisting in the fact that the air terminal connected with the head and the outlets to the earthing are isolated from the structure of this facility, and the breakdown - spark jump between the test wire and the conductive elements of the protected facility is unacceptable.

Therefore, in order to reduce losses, it is necessary to apply appropriate technical solutions, thanks to which it will be possible to reduce, inter alia, the number of fires or limit their effects.

Therefore, the aim of the invention is to develop a new, reliable structure of the lightning rod with a lightning protection system isolated from the protected facility, equipped with a power supply control unit monitoring the technical condition of its head and preventing the lightning current from penetrating into the structure of the protected facility. The aim of the invention is also to develop such lightning rod structure, the system for testing the technical condition of its head could be electrically powered and would have data transmission, without the possibility of transferring the electrical potential of the head to the monitoring device and not requiring the placement of photovoltaic panels near (next to) the head that require their frequent replacement.

The inventions is set out in the appended set of claims 1-11.

The use of a lightning rod with a lightning protection system isolated from the protected facility, with a power supply control and monitoring unit of its head according to the invention, allowed to eliminate numerous inconveniences related to the assessment of the technical condition of the head of the lightning rods known so far, because the use of this new lightning rod eliminated the need to disassemble the head in order to perform the measurement its parameters, and thus the need to use booms (measuring poles), the use of which, especially in strong winds, is very difficult or impossible. In addition, in the lightning rod according to the invention, the power supply control and monitoring unit of the head's technical condition prevents the transfer of the electric potential of the head to the monitoring device, and thus its penetration into the protected facility. On the other hand, the use of an optical fiber as a sensor of the technical condition of the lightning rod head, connected to an electro-optical converter connected to a photovoltaic panel located in an easily accessible place, preferably near the lower part of the mast of this lightning rod, made it possible to easily transmit information about the technical condition of the head directly in remote or wired way.

Moreover, the solution according to the invention is applicable both in case of lightning rods with a lightning protection system isolated from the protected facility, as well as in the lightning protection system not isolated from the facility.

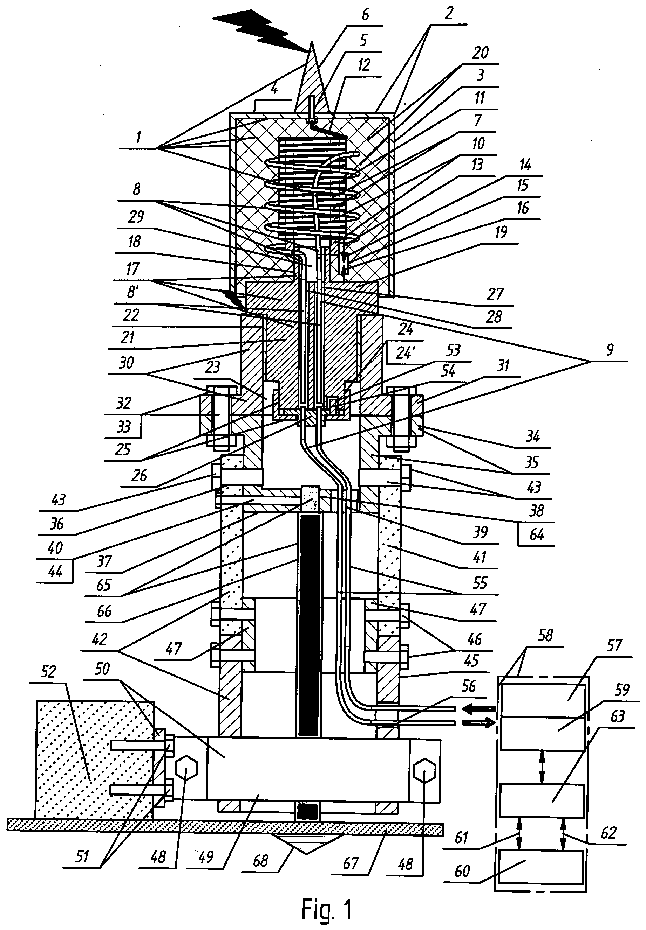

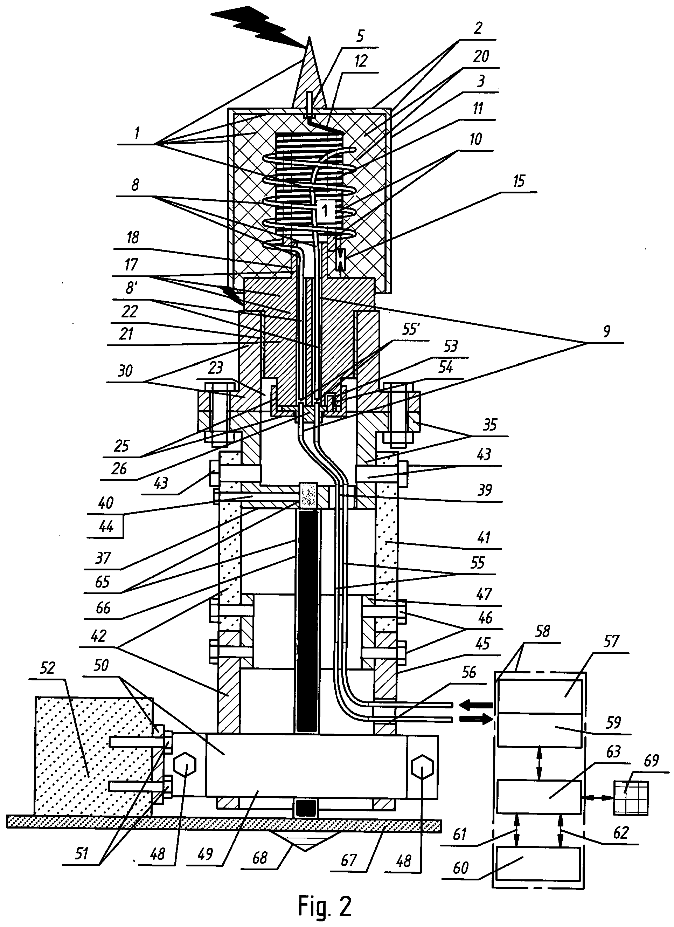

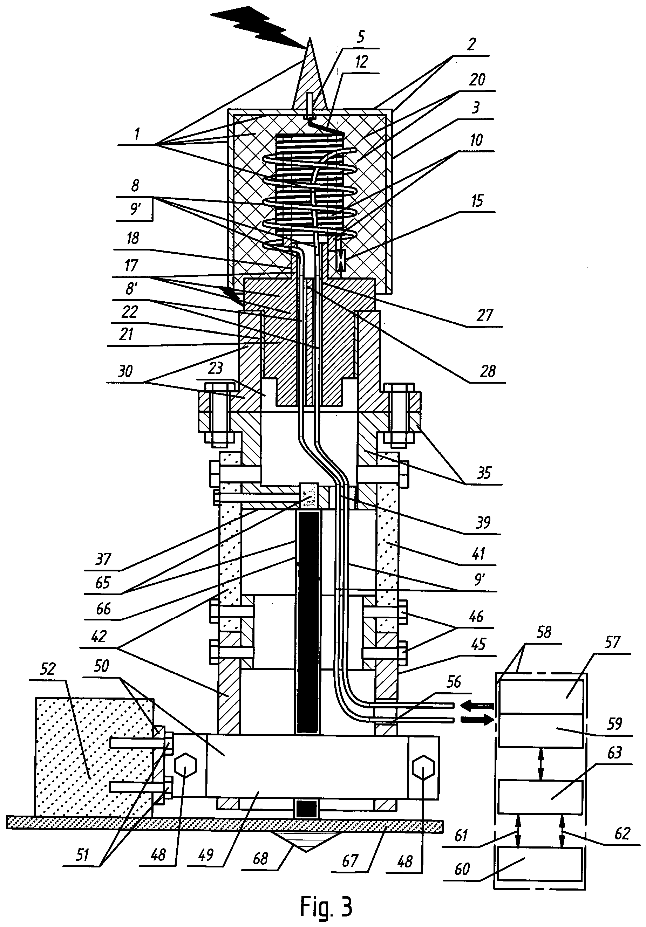

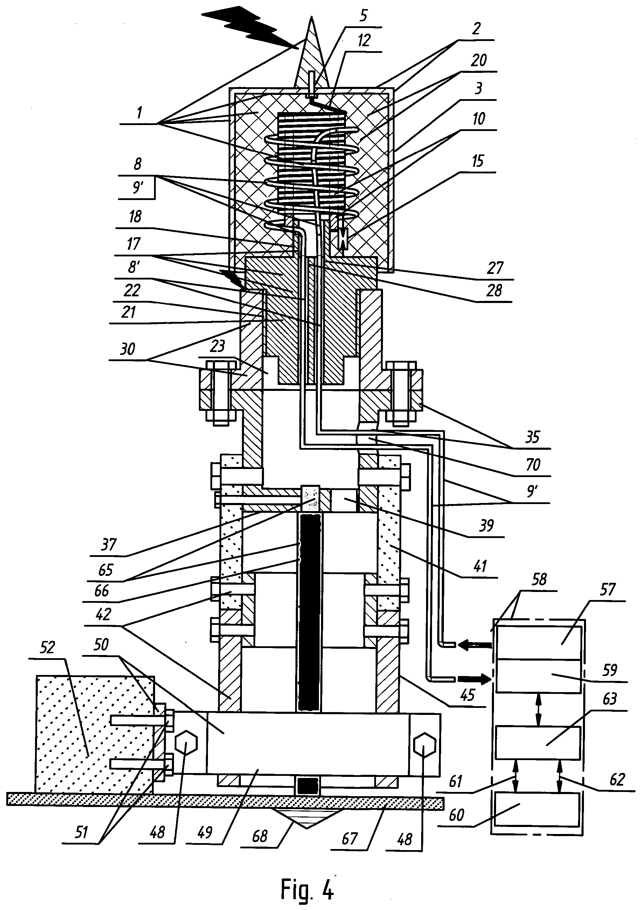

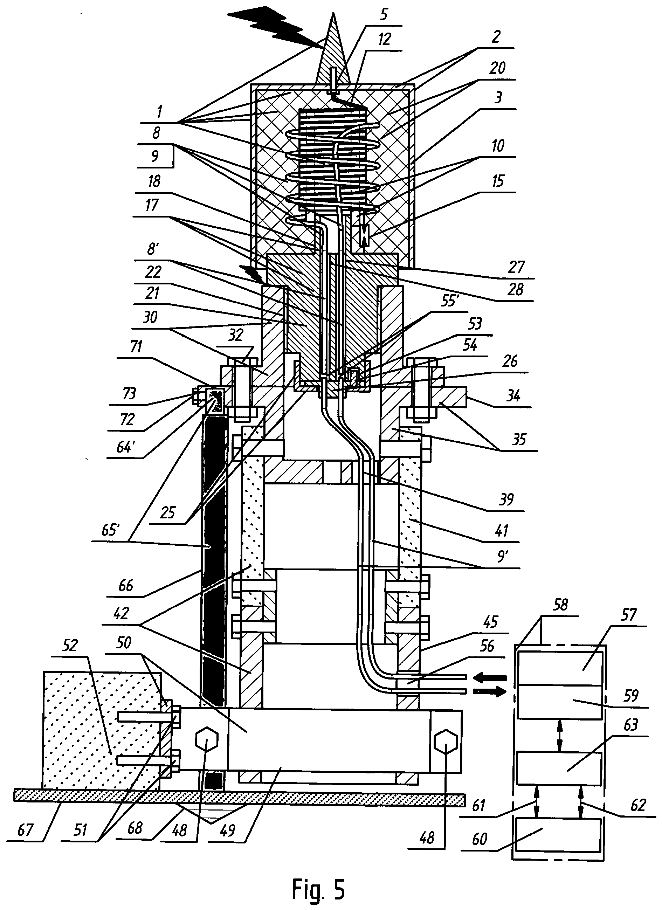

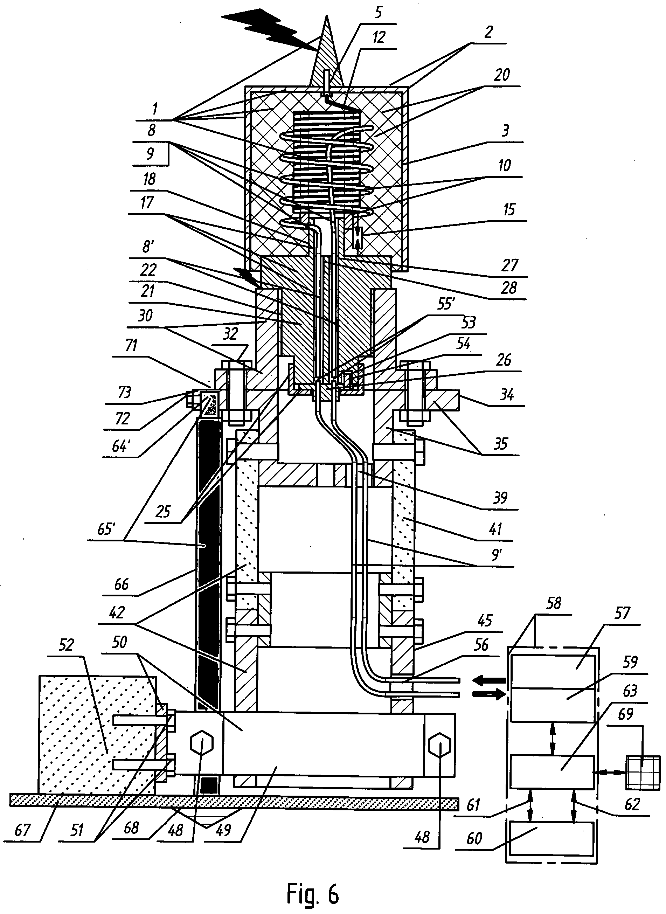

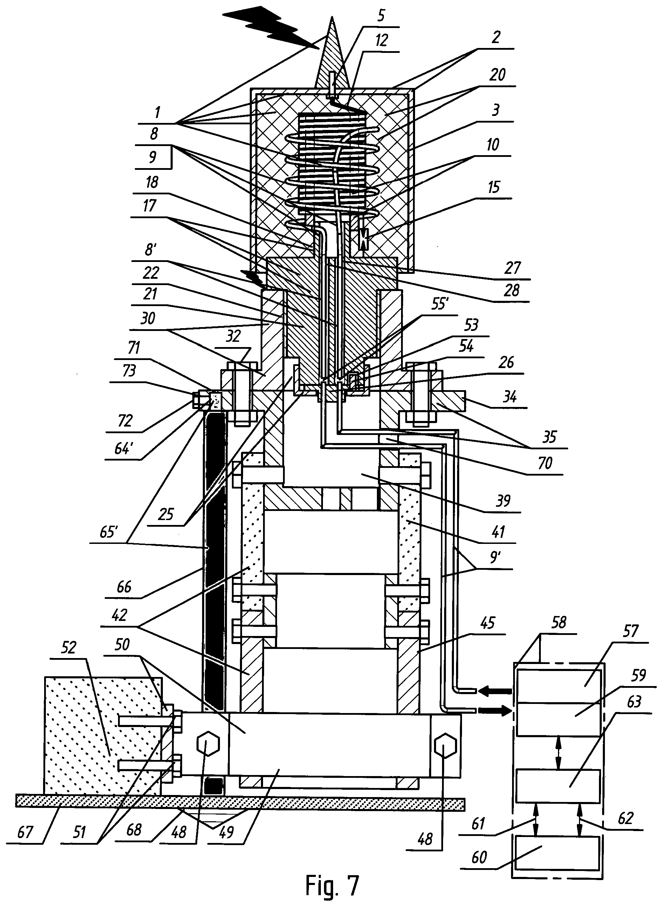

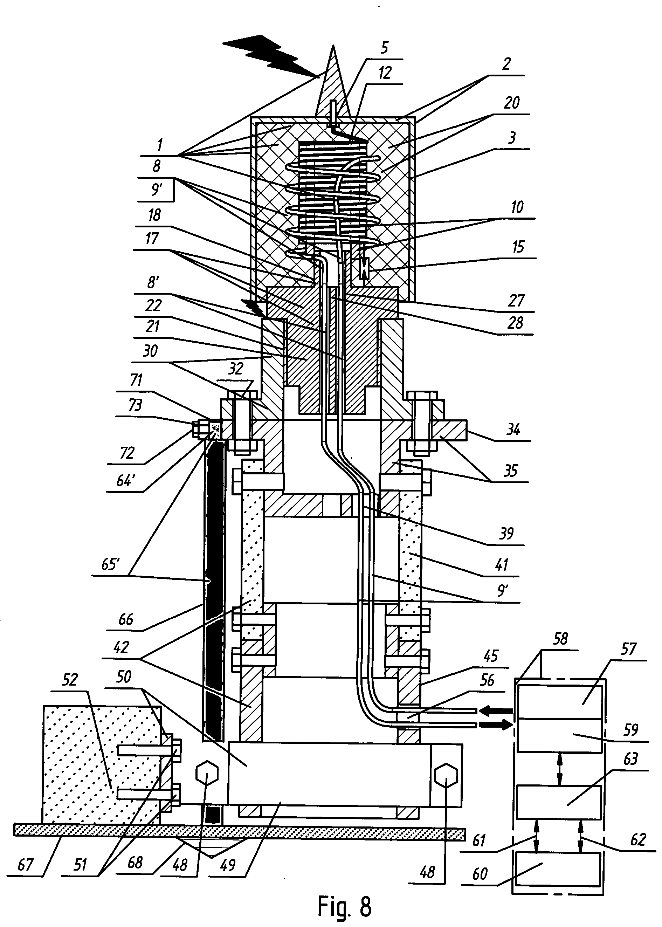

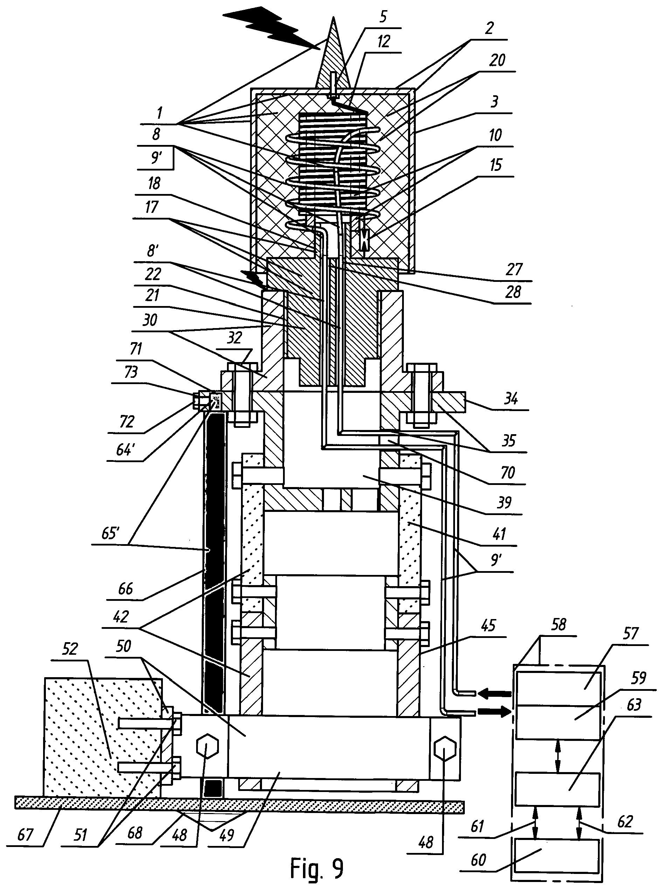

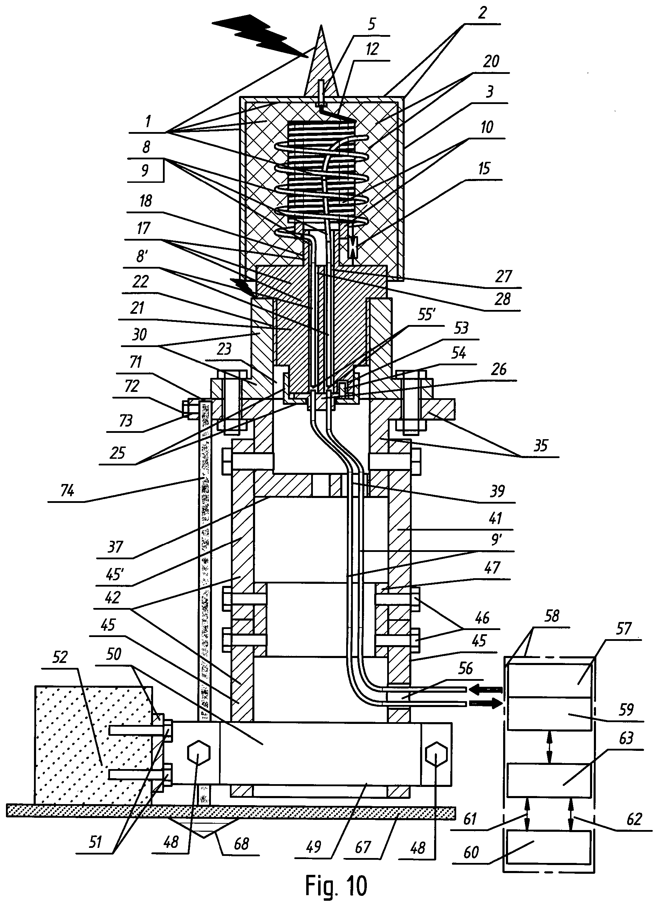

The subject of the invention in ten embodiments is shown in Fig. 1 - Fig. 10, in which Fig. 1 shows the first embodiment of the lightning rod with a lightning protection system isolated from the protected facility, equipped with a power supply, control and monitoring unit of the technical condition of its head and in high-voltage insulated wire and a two-part optical fiber with an upper helical part, placed inside a two-part tubular mast with an upper part made of insulating material and a metal lower part in axial cross-section and with a block arrangement of this assembly, Fig. 2 - the second embodiment of the same lightning rod, in which the electric-optical transducer is connected with a photovoltaic panel feeding it in the axial section and with the block system of the power supply and control unit monitoring the technical condition of its head, Fig. 3 - the third embodiment of this lightning rod equipped with the same high-voltage wire and the one-piece optical fiber with its upper helical part in the axial section and with the block system of the power supply, control and monitoring unit of its head, Fig. 4 - the fourth embodiment of lightning rod similar to the type the third one, the lower ends of the one-piece optical fiber with the upper helical part of it are led outside the mast through the lower metal connection sleeve towards the power supply and control unit monitoring the technical condition of its head in an axial section and with the block system of the power supply and control unit monitoring its head, Fig. 5 - the fifth embodiment of this lightning rod similar to the first embodiment (Fig. 1), the high-voltage insulated wire of which is placed outside and located between the protected facility and the mast, and its insulated upper end is ring embedded in the outer shoulder, Fig. 6 is the sixth embodiment of the same lightning rod (according to the fifth embodiment), in which the electric-optical transducer is connected to the panel that powers it in the axial cross-section and with the block system of the power supply and control unit monitoring the technical condition of its head, Fig. 7 - the seventh embodiment of the same lightning rod similar to the sixth embodiment, the lower ends of the one-piece optical fiber with its upper helical part are led outside the mast through the lower metal connecting sleeve towards the power supply and control unit monitoring the technical condition of its head in the axial section and with the block system of this unit, Fig. 8 - the eighth embodiment of this lightning rod, similar to its third embodiment, with one-piece optical fiber, but with a high-voltage insulated wire located outside and located between the protected facility and the mast in an axial section, and with the block system of the power supply and control unit monitoring the technical condition of its head, Fig. 9 - the ninth embodiment of this lightning rod, similar to the eighth embodiment, the lower ends of the one-piece optical fiber with the upper helical part of it are led outside the mast through the lower metal connecting sleeve towards the power supply and control unit monitoring the technical condition of its head in an axial section and with a block system, Fig. 10 - the tenth embodiment of this lightning rod, similar to the fifth embodiment, but with an external, uninsulated high-voltage wire in the axial cross-section and with the block system of the power supply and control unit monitoring the technical condition of its head.

### Example 1

The lightning rod with a lightning protection system isolated from the protected facility, equipped with a power supply and control unit monitoring the technical condition of its head according to the first embodiment (Fig. 1), has a lightning rod 1 head consisting of a metal housing 2, which is a cylindrical element 3 with an upper bottom 4, connected by a screw 5 with a blade 6 with a conical profile, located in the vertical axis of symmetry of this housing, inside which also in its axis of symmetry is an initiating system 7 supporting the development of the bottom-up leader of this lightning rod, braided with an upper helical part 8 of a two-part optical fiber 9 of 1 mm diameter. This initiating system 7 is a plastic sleeve carcass 10 with a coil 11 wound thereon with an inductance of 1 Hern (H), the upper, protruding end 12 of which is connected via the screw 5 with the metal housing 2 and with the blade 6 of the head 1, while the lower end 13 of the coil 11 is connected in series with an upper electrode 14 of a spark gap 15, opposite to which a lower electrode 16 is placed, electrically connected to an upper surface of a metal profile connector 17, while the lower end of the sleeve carcass 10 is seated on an upper sleeve shoulder 18 of the metal connector 17 all the above-mentioned components of this head together with an upper end of a cylindrical element 19 of the connector 17 are embedded in a solid dielectric 20 made of polyurethane resin, which completely fills the inside of the metal housing 2 along its entire length and adheres to its inner surface. The profile metal connector 17, on the other hand, has an external shape made of three cylindrical elements with different external diameters and the upper sleeve-shaped shoulder 18 of the smallest diameter, constituting a shoulder of the cylindrical element 19 with the largest diameter, having a sleevelike opening at its lower end, forming a second cylindrical element 21 of smaller diameter with an external thread 22 made on its outer surface, which at its lower end also has a sleeve opening 23, forming a third lower cylindrical element 24 with an external thread 24', on which a nut 25 is screwed tightening the optical fiber connector to its face 26. In the axis of symmetry of the three cylindrical elements 19, 21 and 24, two vertically arranged through holes 27 and 28 are made, constituting an extension of one axial opening 29, the upper sleeve shoulder 18 of the monolithic profile connector 17, in which two lower vertically situated ends 8' of the two-part optical fiber 9 are placed. In addition, the upper end of an upper metal connecting sleeve 30 is screwed onto the threaded cylindrical element 21 of the profile connector 17, a lower outer annular shoulder 31 of which is connected by means of screws 32 and nuts 33 to an upper outer annular shoulder 34 of the lower metal connecting sleeve 35 with side threaded holes 36 and a lower bottom 37 in which an axial through-hole 38 is made and a vertical through-hole 39 situated next to it. Moreover, in the lower bottom 37 and at the lower end of the lower metal connecting sleeve 35, a threaded through hole 40 perpendicular to the axis of the opening 38 is provided, reaching the axial opening 38, while at the lower end of the lower metal connecting sleeve 35 an upper tubular element 41 with an inside diameter of 30 mm is mounted, made of polypropylene as an insulating material with high mechanical strength and resistance to changing weather conditions of a two-part mast 42, which is connected by means of screws 43 to the metal lower connection sleeve 35, and by means of a screw 44 to the bottom 37 of this connection sleeve, which is screwed into the threaded hole 40 provided in the bottom. The second part of the mast 42 is a lower metal tubular element 45, the upper face of which is adjoined by the lower face of the upper polypropylene tubular element 41, and both inner ends of these elements are connected to each other by means of screws 46 embedded in their through holes and screwed into threaded holes made in metal connectors 47 adjacent to the inner surfaces of both tubular elements 41 and 45 of the mast 42, and to the lower end of the metal tubular element 45 by means of bolts 48 a metal T-profile connector 49 is attached, a foot 50 of which is attached to the corresponding bolts 51 by means of element of a protected facility 52. A pressure nut 25 is screwed onto the lower threaded cylindrical element 24 of the metal profile connector 17, pressing the fiber optic connector 26 against its front, and in this forehead there is a recess 53 with a pin 54 positioned in it for positioning the fiber optic connector, while in the opening 29 of the sleeve shoulder 18 of the profile connector 17 and in its vertical openings 27 and 28 both lower straight ends of the helical part 8 of the optical fiber 9 are placed. In turn, there are two fiber optic cables 55 embedded in the fiber optic connector 26, the upper ends of which are seated in the fiber optic connector 26 and face the lower ends 8 'of the upper helical part 8, so that extending slots 55' are formed between the ends of these ends. optical fiber 9, the optical fibres 55 pass through the opening 39 of the bottom 37 of the metal connecting sleeve 33 and through an opening 56 made in its lower part and above the metal connector 49 of the metal tubular element 45 of the mast 42 and extend outside the mast so that one of these wires is located opposite a LED light transmitter 57 of the power supply, control and monitoring unit 58 the technical condition of this lightning rod. In turn, the power supply, control and monitoring unit 58 consists of a power supply - monitoring and information transmitting device 60 connected wirelessly 61 (by radio) and wired 62 with an electro-optical converter 63 which is electrically connected with the LED light receiver 59 and the LED lights transmitter 57. In addition, in the axial opening 38 of the bottom 37 of the metal connection sleeve 35 there is embedded an electrically conductive upper end 64 of an insulated high-voltage copper wire 65 of approximately 100 kV, the further lower part of which is covered with high-voltage insulation 66 made of cross-linked polyethylene, and the lower end of this high-voltage wire it is embedded in the ground 67 and is connected to an earthing 68.

### Example 2

The lightning rod with a lightning protection system isolated from the protected facility, equipped with a power supply and control unit 58 monitoring the technical condition of its head 1 according to the second embodiment (Figures 1 and 2) has a structure similar to that described in the first example, and the difference between both of these embodiments consists only in the fact that in the second embodiment the electric-optical converter 62 is connected to a photovoltaic panel 69 which supplies it.

### Example 3

A lightning rod with a lightning protection system isolated from the protected facility, equipped with a power supply and control unit 58 monitoring the technical condition of its head 1 according to the third embodiment (Fig. 3) has a structure similar to the lightning rod according to the first embodiment described in the first example, and the difference between these embodiments consists only in the fact that in this third embodiment, the lightning rod has a one-piece optical fiber 9' with a diameter of 0.1 mm entwining the initiating system 7 with the upper helical part 8, supporting the development of the bottom-up leader of this lightning rod, and its ends 8' pass completely through both openings 27 and 28 of the metal profile connector 17 and through the opening 39 made in the bottom 37 of the metal connecting sleeve 35 and the side opening 56 of the lower metal tubular element 45 of the mast 42 and extend outwardly therefrom so as to be properly aligned with the LED light transmitter 57 and LED light receiver 59 of power, control and monitoring unit 58. In addition, in this embodiment, the coil 11 wound around the carcass 10 has an inductance of 0.1 H.

### Example 4

The lightning rod with a lightning protection system isolated from the protected facility, equipped with a power supply and control unit 58 monitoring the technical condition of its head 1 according to the fourth embodiment (Fig. 4) has a structure similar to the lightning rod according to the third embodiment described in the third example, and the difference between these embodiments consists only in the fact that in this fourth embodiment, the lower ends of the one-piece optical fiber 9', after they are led out of both openings 27 and 28 of the metal profile connector 17, are led out of its mast 42 through a side opening 70 made in the sleeve-shaped lower part the metal connecting sleeve 35 and are located respectively opposite the LED light transmitter 57 and the LED light receiver 59 of the power supply, control and monitoring unit 58.

### Example 5

A lightning rod with a lightning protection system isolated from the protected facility, equipped with a power supply and control unit 58 monitoring the technical condition of its head 1 according to the fifth embodiment (Fig. 5) has a structure similar to that described in the first example, and the difference between these two embodiments is only that in this fifth embodiment the optical fiber 9 has a diameter of 2 mm and the insulated high voltage conductor 65' is placed outside the mast 42 and is located between this mast and the protected facility 52, so that its electrically conductive upper end 64' is embedded in a hole 71 made in the upper outer annular shoulder of the lower metal connecting sleeve 35 between its face and the bolt 32, and the lower end of its distal part covered with high-voltage polyurethane insulation 66 is connected to the ground 67 and earthing 68, this electrically conductive upper end 64' of the wire is tightened by a locking screw 72 screwed into a threaded hole 73 made on the outer surface of the annular shoulder 34 of the connecting sleeve 35. Furthermore, the positioning of this insulated high voltage wire 65' outside the mast 42 eliminated the screw 44 screwed into the hole 40 of the bottom 37 of the connecting sleeve 35 through a coaxial hole made in the upper tubular insulating element 41 of the mast 42. In this embodiment, the coil 11, wound on the carcass 10, has an inductance of 10 H, while its high-voltage wire 65' is made of aluminium.

### Example 6

The lightning rod with a lightning protection system isolated from the protected facility, equipped with a power supply and control unit 58 monitoring the technical condition of its head 1 according to its sixth embodiment (Fig. 6) has a structure similar to that described in the fifth example, and the difference between both of these embodiments is only in the fact that in this sixth embodiment the electric-optical converter 62 is connected to the photovoltaic wire 69 that supplies it.

### Example 7

The lightning rod with a lightning protection system isolated from the protected facility, equipped with a power supply and control unit 58 monitoring the technical condition of its head 1 according to the seventh version (Fig. 7) also has a structure similar to the lightning rod according to the fifth embodiment described in the fifth example, and the difference between these two embodiments consists only in the fact that in this seventh embodiment, the lower ends of the two-part optical fiber 9, after they are led out of both openings of the optical fiber connector 26, are led out of its mast 42 through the side opening 70 made in the sleeve-shaped part of the lower metal connecting sleeve 35 and are located respectively opposite the LED light transmitter 57 and the LED light receiver 59 of the power supply, control and monitoring unit 58.

### Example 8

The lightning rod with a lightning protection system isolated from the protected facility, equipped with a power supply and control unit 58, monitoring the technical condition of its head 1 according to the eighth version of its implementation (Fig. 8) has a structure similar to the lightning rod according to the seventh embodiment described in the seventh example, and the difference between with both these embodiments consists only in the fact that in this eighth embodiment, the lightning rod has a one-piece optical fiber 9' with a diameter of 5 mm entwining with the upper helical part 8 the initiating system 7 supporting the development of the bottom-up leader of this lightning rod, the ends of which 8' through the opening 39 made in the bottom 37 of the metal connecting sleeve 35 and the opening 56 of the lower metal tubular element 45 of the mast 42 extend outside it so as to be positioned respectively opposite the LED light transmitter 57 and the LED light receiver 59 of the power supply, control and monitoring unit 58.

### Example 9

The lightning rod with a lightning protection system isolated from the protected facility, equipped with a power supply and control unit 58 monitoring the technical condition of its head 1 according to the ninth embodiment (Fig. 9) has a structure similar to the lightning rod according to the eighth embodiment described in the eighth example, and the difference between these embodiments is only that in this ninth embodiment, the lower ends of the one-piece optical fiber 9', after they are led out of both openings 27 and 28 of the metal profile connector 17, are led outside its mast 42 through the side opening 70 made in the sleeve-shaped metal lower part the connecting sleeve 35 and are located respectively opposite the LED light transmitter 57 and the LED light receiver 59 of the power supply, control and monitoring unit 58.

### Example 10

The lightning rod with a lightning protection system isolated from the protected facility, equipped with a power supply and control unit 58 monitoring the technical condition of its head 1 according to the tenth embodiment (Fig. 10) has a structure similar to that of the lightning rod according to its fifth embodiment, and the difference between these two types is only that in this tenth embodiment variant, instead of an insulated high-voltage wire 65' located outside the mast 42, next to the protected facility 52, a high-voltage cable 74 without external insulation with a cross-section of 50 mm² was used, and in this embodiment, the mast 42 has both connected to each other by means of bolts 46 and couplings 47 the tubular elements 45 and 45' made of metal.

In addition, depending on the needs of the user of this lightning rod, the length of its mast 42 should be from 3 m to 5 m, and its distance from the facility 52 from 0.5 m to 1.5 m, while the internal diameter of the mast should be from 20 mm to 100 mm.

In the lightning rod according to the invention, the light sent from the LED transmitter 57 through the 1-2 m long optical fiber 9 is introduced through the fiber optic connector 26 screwed onto the metal profile connector 17 into the lightning rod head 1, and then it returns through this profile connector 17 and this fiber optic connector 26 to the LED light receiver 59, and after converting it into an electrical signal, it is transmitted to the monitoring device 60, which electrically supplies the electro-optical converter 63 of the power supply, control and monitoring unit 58, transmitting electrical signals and analysing the technical condition of the lightning rod head 1, and the result obtained is displayed or transmitted to the monitoring system of the protected facility 52. The electro-optical converter 63 of this unit 58 can also be powered by the connected photovoltaic panel 69 cooperating with a battery (not shown), the panel being positioned easily o accessible for periodic maintenance, preferably near the bottom of the mast of this lightning rod. The information between the electro-optical converter 63 and the monitoring device 60 is transmitted directly via radio 61, or via a wire connection between them 62.

## Claims

1. A lightning rod with a lightning protection system isolated from the protected facility comprising a head (1), equipped with a power supply, control and monitoring unit (58) monitoring the technical condition of the head (1), having a mast (42) equipped with an high voltage wire (65, 65', 74) connecting an air terminal with an earth electrode and connected to the head (1) with a blade (6), equipped with an initiating system (7) containing a coil (11) connected in series with one end with this blade and the other end with a spark gap (15) connected to the mast (42), wherein the lightning rod has the lightning rod head (1) consisting of a metal cylindrical housing (2) with an upper bottom (4) detachably connected to the blade (6), wherein inside said housing (2), in its symmetry axis there is the initiating system (7) braided with an upper helical part (8) of an optical fiber (9, 9'), electrically connected with this blade (6), and with the other end through the spark gap (15) electrically connected with an upper surface of a metal profile of a connector (17) and mechanically - inseparably with a sleeve shoulder (18) with an axial hole (29) of this connector with two through holes (27 and 28) made in it opposite the axial hole (29), in which both lower ends (8') of the helical part (8) of the optical fiber (9, 9') are placed, and further parts of the optical fiber (9, 9') go out through a hole in a metal connecting sleeve (35) and through a hole (39) of its bottom (37) and through a hole of the two-piece mast (42) and through a hole (56) of a metal tubular element (45) of this mast so that one end of the optical fiber (9, 9') is located opposite a LED light emitter (57) of the power supply, control and monitoring unit (58) and the other end of this optical fiber is opposite a LED light receiver (59), while an electrically conductive end (64, 64') of the insulated high voltage wire (65, 65') or metal high-voltage wire (74) is connected to the connecting sleeve (35), the lower end of which is embedded in the ground (67) and connected to an earthing (68).

2. The lightning rod according to claim 1, **characterized in that** the lower ends (8') of the helical part (8) of the optical fiber (9) and the upper ends of the optical fibers (55) opposite them, constituting an extension of the optical fiber, are embedded in an optical fiber connector (26) detachably connected to the lower cylindrical element of the connector (17).

3. The lightning rod according to claim 1, **characterized in that** a threaded cylindrical element (21) of the metal profile connector (17) is detachably connected to an upper metal connecting sleeve (30), a lower outer annular shoulder (31) of which is detachably connected to an upper outer annular shoulder (34) of the lower metal connecting sleeve (35), the lower end of which is placed inside an upper tubular element (41) made of insulating material, of the two-piece mast (42) and is detachably connected to it, and the lower face of this upper tubular element (41) rests against the upper face the metal tubular element (45) of a two-piece mast (42), while the ends of both tubular elements (41 and 45) being detachably connected to each other, while a metal connector (49) with a T-profile is attached to the lower end of the metal tubular element (45).

4. The lightning rod according to claim 1, **characterized in that** the power supply, control and monitoring unit (58) of its lightning rod head (1) situated outside its two-piece mast (42) consists of a wirelessly connected power supply and information transport device (60) and wired (62) to an electro-optical converter (63) which is electrically connected to the LED light receiver (59) located opposite the first outer end of the optical fiber (9) and the LED light transmitter (57) situated opposite the second outer end of the optical fiber (9).

5. The lightning rod according to claim 1 or 3, **characterized in that** the electric-optical converter (63) of the power supply, control and monitoring unit (58) is electrically connected to a photovoltaic panel (69) which supplies it.

6. A lightning rod according to claim 1 or 3, **characterized in that** the initiating system (7) of its head (1) is spirally braided with a two-part optical fiber (9), the upper part of which is placed in the head (1) and in the metal profile connector (17), and its lower part is placed in the fiber optic connector (26) detachably connected to this profile connector (17) and inside the metal connecting sleeve (35) and the detachably connected two-piece mast (42).

7. A lightning rod according to claim 1 or 3, **characterized in that** the initiating system (7) of its head (1) is braided in a spiral with the one-piece monolithic fiber optic wire (9').

8. A lightning rod according to claim 1, **characterized in that** its two-piece mast (42) is made of metal.

9. The lightning rod according to claim 1, **characterized in that** the insulated high voltage wire (65) is placed inside the two-part mast (42), and its electrically conductive upper end (64) is seated in a through-hole (38) of the bottom (37) of the connecting sleeve (35), and its lower end is embedded in the ground (67) and connected to earthing (68).

10. A lightning rod according to claim 1, **characterized in that** its insulated high voltage wire (65') is placed outside the two-part mast (42) and is located between the mast and a protected facility (52), and its electrically conductive upper end (64') is detachably connected to the outer of the annular shoulder of the lower metal connecting sleeve (35), and its further lower part, sheathed with high-voltage insulation of about 100 kV, is connected to the ground (67) and earthing (68).

11. The lightning rod according to claim 1 or 9 or 10, **characterized in that** the high-voltage wire (74) located outside the two-part mast (42) and situated between the mast and the protected facility (52).

## Patentansprüche

1. Ein Blitzableiter mit einem von der geschützten Anlage isolierten Blitzschutzsystem, bestehend aus einem Kopf (1), der mit einer Stromversorgungs-, Steuer- und Überwachungseinheit (58) ausgestattet ist, welche den technischen Zustand des Kopfes (1) kontrolliert, sowie einem Mast (42), der mit einem Hochspannungskabel (65, 65', 74), der eine Blitzableiterklemme mit einer Erdungselektrode verbindet und mit dem Kopf (1) verbunden ist, sowie einer Klinge (6), die mit einem Zündsystem (7) ausgestattet ist, das eine Spule (11) enthält, deren eines Ende in Reihe mit dieser Klinge und deren anderes Ende mit einer Funkenstrecke (15) verbunden ist, die mit dem Mast (42) verbunden ist, wobei der Blitzableiter den Blitzableiterkopf (1) aufweist, der aus einem zylindrischen Metallgehäuse (2) mit einem oberen Boden (4) besteht, der lösbar mit der Klinge (6) verbunden ist, wobei sich innerhalb des Gehäuses (2) in dessen Symmetrieachse das Zündsystem (7) befindet, das mit einem oberen spiralförmigen Teil (8) einer optischen Faser (9, 9') verflochten ist, das elektrisch mit dieser Lamelle (6) verbunden ist, und dessen anderes Ende über die Funkenstrecke (15) elektrisch mit einer Oberseite eines Metallprofils eines Verbinders (17) und mechanisch untrennbar mit einer Hülsenschulter (18) verbunden ist, die eine axiale Öffnung (29) aufweist, wobei in diesem Verbinder zwei durchgehende Öffnungen (27 und 28) gegenüber der axialen Öffnung (29) ausgebildet sind (29) angeordnet sind, und weitere Teile der optischen Faser (9, 9') durch eine Öffnung in einer Metallverbindungshülse (35) und durch eine Öffnung (39) ihres Bodens (37) sowie durch eine Öffnung des zweiteiligen Mastes (42) sowie durch eine Öffnung (56) eines metallischen Rohrelements (45) dieses Mastes verlaufen, sodass sich ein Ende der optischen Faser (9, 9') gegenüber einem LED-Lichtemitter (57) der Stromversorgungs-, Steuer- und Überwachungseinheit (58) befindet und das andere Ende dieser optischen Faser gegenüber einem LED-Lichtempfänger (59) liegt, während ein elektrisch leitendes Ende (64, 64') des isolierten Hochspannungskabels (65, 65') oder des metallischen Hochspannungskabels (74) mit der Verbindungshülse (35) verbunden ist, deren unteres Ende im Boden (67) verankert und mit einer Erdung (68) verbunden ist.

2. Ein Blitzableiter nach Anspruch 1, **dadurch gekennzeichnet, dass** die unteren Enden (8') des spiralförmigen Teils (8) der optischen Faser (9) und die ihnen gegenüberliegenden oberen Enden der optischen Fasern (55), die eine Verlängerung der optischen Faser bilden, in einen optischen Faserverbinder (26) eingebettet sind, der lösbar mit dem unteren zylindrischen Element des Verbindungselements (17) verbunden ist.

3. Ein Blitzableiter nach Anspruch 1, **dadurch gekennzeichnet, dass** ein mit Gewinde versehenes zylindrisches Element (21) des Metallprofilverbinders (17) lösbar mit einer oberen Metallverbindungshülse (30) verbunden ist, deren unterer äußerer ringförmiger Ansatz (31) lösbar mit einem oberen äußeren ringförmigen Ansatz (34) der unteren Metallverbindungshülse (35) verbunden ist, dessen unteres Ende in einem oberen Rohrelement (41) aus Isoliermaterial des zweiteiligen Mastes (42) angeordnet und lösbar mit diesem verbunden ist, und die Unterseite dieses oberen Rohrelements (41) an der Oberseite des Metallrohrelements (45) eines zweiteiligen Mastes (42) anliegt, wobei die Enden beider Rohrelemente (41 und 45) lösbar miteinander verbunden sind, während am unteren Ende des Metallrohrteils (45) ein Metallverbinder (49) mit T-Profil angebracht ist.

4. Ein Blitzableiter nach Anspruch 1, **dadurch gekennzeichnet, dass** die außerhalb seines zweiteiligen Mastes (42) angeordnete Versorgungs-, Steuer- und Überwachungseinheit (58) seines Blitzableiterkopfes (1) aus einer drahtlos verbundenen Versorgungs- und Informationsübertragungseinrichtung (60) besteht und über eine Leitung (62) mit einem elektrooptischen Wandler (63) verbunden ist, der elektrisch mit dem LED-Lichtempfänger (59), der gegenüber dem ersten äußeren Ende der Lichtleitfaser (9) angeordnet ist, und dem LED-Lichtsender (57), der gegenüber dem zweiten äußeren Ende der Lichtleitfaser (9) angeordnet ist, verbunden ist.

5. Ein Blitzableiter nach Anspruch 1 oder 3, **dadurch gekennzeichnet, dass** der elektrooptische Konverter (63) der Versorgungs-, Steuer- und Überwachungseinheit (58) elektrisch mit einem Photovoltaikmodul (69) verbunden ist, das ihn mit Strom versorgt.

6. Ein Blitzableiter nach Anspruch 1 oder 3, **dadurch gekennzeichnet, dass** das Auslösesystem (7) seines Kopfes (1) spiralförmig mit einer zweiteiligen Glasfaser (9) geflochten ist, dessen oberer Teil im Kopf (1) und im Metallprofilverbinder (17) angeordnet ist und dessen unterer Teil im Glasfaserverbinder (26), der lösbar mit diesem Profilverbinder (17) verbunden ist, sowie im Inneren der Metallverbindungshülse (35) und des lösbar verbundenen zweiteiligen Mastes (42) angeordnet ist.

7. Ein Blitzableiter nach Anspruch 1 oder 3, **dadurch gekennzeichnet, dass** das Zündsystem (7) seines Kopfes (1) spiralförmig mit dem einteiligen, monolithischen Glasfaserkabel (9') verflochten ist.

8. Ein Blitzableiter nach Anspruch 1, **dadurch gekennzeichnet, dass** sein zweiteiliger Mast (42) aus Metall besteht.

9. Ein Blitzableiter nach Anspruch 1, **dadurch gekennzeichnet, dass** der isolierte Hochspannungsdraht (65) innerhalb des zweiteiligen Mastes (42) angeordnet ist und sein elektrisch leitendes oberes Ende (64) in einer durchgehenden Öffnung (38) des Bodens (37) der Verbindungshülse (35) sitzt, und dessen unteres Ende im Boden (67) vergraben und mit der Erdung (68) verbunden ist.

10. Ein Blitzableiter nach Anspruch 1, **dadurch gekennzeichnet, dass** sein isolierter Hochspannungsdraht (65') außerhalb des zweiteiligen Mastes (42) angeordnet ist und sich zwischen dem Mast und einer zu schützenden Anlage (52) befindet, und sein elektrisch leitendes oberes Ende (64') lösbar mit der Außenseite der ringförmigen Schulter der unteren Metallverbindungshülse (35) verbunden ist, und dessen weiterer unterer Teil, der mit einer Hochspannungsisolierung von etwa 100 kV ummantelt ist, mit der Erde (67) und der Erdung (68) verbunden ist.

11. Ein Blitzableiter nach Anspruch 1 oder 9 oder 10, **dadurch gekennzeichnet, dass** sich der Hochspannungsdraht (74) außerhalb des zweiteiligen Mastes (42) und zwischen dem Mast und der zu schützenden Anlage (52) befindet.

## Revendications

1. Un paratonnerre doté d'un système de protection contre la foudre isolé de l'installation protégée, comprenant une tête (1) équipée d'une unité d'alimentation, de commande et de surveillance (58) qui surveille l'état technique de la tête (1), comportant un mât (42) équipé d'un câble haute tension (65, 65', 74) reliant une borne aérienne à une électrode de terre et relié à la tête (1) par une lame (6), équipé d'un système de déclenchement (7) contenant une bobine (11) connectée en série, par une extrémité, à cette lame et, par l'autre extrémité, à un éclateur (15) relié au mât (42), dans lequel le paratonnerre comporte la tête de paratonnerre (1) constituée d'un boîtier cylindrique métallique (2) avec une partie supérieure (4) reliée de manière amovible à la lame (6), dans lequel, à l'intérieur dudit boîtier (2), sur son axe de symétrie, se trouve le système d'amorçage (7) tressé avec une partie hélicoïdale supérieure (8) d'une fibre optique (9, 9'), reliée électriquement à cette lame (6), et dont l'autre extrémité est reliée électriquement, via l'éclateur (15), à une surface supérieure d'un profilé métallique d'un connecteur (17) et mécaniquement de manière indissociable à un épaulement de manchon (18) comportant un trou axial (29) de ce connecteur, dans lequel sont pratiqués deux trous traversants (27 et 28) situés en face du trou axial (29), dans lequel les deux extrémités inférieures (8') de la partie hélicoïdale (8) de la fibre optique (9, 9') sont placées, et les parties restantes de la fibre optique (9, 9') sortent par un trou dans un manchon de raccordement métallique (35) et par un trou (39) de son fond (37) et par un trou du mât en deux parties (42) et à travers un trou (56) d'un élément tubulaire métallique (45) de ce mât, de sorte qu'une extrémité de la fibre optique (9, 9') se trouve en face d'un émetteur de lumière à LED (57) de l'unité d'alimentation, de commande et de surveillance (58) et que l'autre extrémité de cette fibre optique se trouve en face d'un récepteur de lumière à LED (59), tandis qu'une extrémité électriquement conductrice (64, 64') du fil haute tension isolé (65, 65') ou du fil haute tension métallique (74) est reliée au manchon de raccordement (35), dont l'extrémité inférieure est enfoncée dans le sol (67) et reliée à une mise à la terre (68).

2. Paratonnerre selon la revendication 1, **caractérisé en ce que** les extrémités inférieures (8') de la partie hélicoïdale (8) de la fibre optique (9) et les extrémités supérieures des fibres optiques (55) situées en face de celles-ci, constituant un prolongement de la fibre optique, sont encastrées dans un connecteur de fibre optique (26) relié de manière amovible à l'élément cylindrique inférieur du connecteur (17).

3. Le paratonnerre selon la revendication 1, **caractérisé en ce qu'**un élément cylindrique fileté (21) du connecteur à profil métallique (17) est relié de manière amovible à un manchon de raccordement métallique supérieur (30), dont un épaulement annulaire extérieur inférieur (31) est relié de manière amovible à un épaulement annulaire extérieur supérieur (34) du manchon de raccordement métallique inférieur (35), dont l'extrémité inférieure est placée à l'intérieur d'un élément tubulaire supérieur (41) en matériau isolant, du mât en deux parties (42), et y est reliée de manière amovible, et la face inférieure de cet élément tubulaire supérieur (41) repose contre la face supérieure de l'élément tubulaire métallique (45) d'un mât en deux parties (42), tandis que les extrémités des deux éléments tubulaires (41 et 45) sont reliées de manière amovible l'une à l'autre, et qu'un connecteur métallique (49) à profil en T est fixé à l'extrémité inférieure de l'élément tubulaire métallique (45).

4. Paratonnerre selon la revendication 1, **caractérisé en ce que** l'unité d'alimentation, de commande et de surveillance (58) de sa tête de paratonnerre (1), située à l'extérieur de son mât en deux parties (42), se compose d'un dispositif d'alimentation et de transport d'informations (60) connecté sans fil et relié par câble (62) à un convertisseur électro-optique (63) qui est relié électriquement au récepteur de lumière LED (59) situé en face de la première extrémité extérieure de la fibre optique (9) et à l'émetteur de lumière LED (57) situé en face de la deuxième extrémité extérieure de la fibre optique (9).

5. Le paratonnerre selon la revendication 1 ou 3, **caractérisé en ce que** le convertisseur électro-optique (63) de l'unité d'alimentation, de commande et de surveillance (58) est relié électriquement à un panneau photovoltaïque (69) qui l'alimente.

6. Paratonnerre selon la revendication 1 ou 3, **caractérisé en ce que** le système de déclenchement (7) de sa tête (1) est tressé en spirale avec une fibre optique (9) en deux parties, dont la partie supérieure est placée dans la tête (1) et dans le connecteur de profilé métallique (17), et dont la partie inférieure est placée dans le connecteur de fibre optique (26) relié de manière amovible à ce connecteur de profilé (17) et à l'intérieur du manchon de raccordement métallique (35) et du mât en deux parties (42) relié de manière amovible.

7. Paratonnerre selon la revendication 1 ou 3, **caractérisé en ce que** le système de déclenchement (7) de sa tête (1) est tressé en spirale avec le fil à fibre optique monolithique en une seule pièce (9').

8. Paratonnerre selon la revendication 1, **caractérisé en ce que** son mât en deux parties (42) est en métal.

9. Paratonnerre selon la revendication 1, **caractérisé en ce que** le fil haute tension isolé (65) est placé à l'intérieur du mât en deux parties (42), et son extrémité supérieure électriquement conductrice (64) est logée dans un trou traversant (38) du fond (37) du manchon de raccordement (35), et son extrémité inférieure est enfouie dans le sol (67) et reliée à la terre (68).

10. Un paratonnerre selon la revendication 1, **caractérisé en ce que** son fil haute tension isolé (65') est placé à l'extérieur du mât en deux parties (42) et est situé entre le mât et une installation protégée (52), et son extrémité supérieure électriquement conductrice (64') est reliée de manière amovible à la partie extérieure de l'épaulement annulaire du manchon de raccordement métallique inférieur (35), et sa partie inférieure supplémentaire, gainée d'une isolation haute tension d'environ 100 kV, est reliée à la terre (67) et à la mise à la terre (68).

11. Paratonnerre selon la revendication 1, 9 ou 10, **caractérisé en ce que** le câble haute tension (74) est placé à l'extérieur du mât en deux parties (42) et se trouve entre le mât et l'installation protégée (52).
